# FASCICULE DE BREVET EUROPEEN

(11) **EP 1 034 085 B1**
(45) Date de publication et mention de la délivrance du brevet: **24.05.2006**
(21) Numéro de dépôt: 99943031.7
(22) Date de dépôt: 23.09.1999
(51) Int. Cl.: B60J 10/02, B60J 10/00

(54) **VITRAGE AVEC UN CORDON PROFILE COMPRENANT UN APPENDICE DE RECOUVREMENT**
VERGLASUNG MIT EINEM PROFILIERTEN BAND, DAS MIT EINEM ABDECKUNGSANSATZ VERSEHEN IST
GLAZING WITH A PROFILED STRING RIM COMPRISING AN OVERLAY APPENDAGE

(30) Priorité: 24.09.1998 DE 19843843
(43) Date de publication de la demande: 13.09.2000
(73) Titulaire: SAINT-GOBAIN GLASS FRANCE, 92400 Courbevoie (FR)
(72) Inventeur: CORNILS, Gerd, D-52399 Merzenich-Girbelsrath (DE); FISCHER, Florian, D-52070 Aachen (DE); BIHN, Frank, D-41836 Hückelhoven (DE); BEHREND, Ulrich, D-52224 Stolberg (DE)
(74) Mandataire: Cardin, Elise
(86) Numéro de dépôt international: PCT/FR1999/002260
(87) Numéro de publication internationale: WO 2000/017002

(56) Documents cités:
- EP-A- 0 611 672
- EP-A- 1 023 194
- DE-A- 4 039 552
- US-A- 5 567 239
- US-A- 5 806 257

## Description

L'invention se rapporte au domaine du vitrage, notamment pour les véhicules automobiles, et vise plus particulièrement des vitrages équipés d'éléments décoratifs et/ou fonctionnels rapportés sur le verre. Elle concerne plus spécialement un vitrage, en particulier pour l'installation dans une baie de carrosserie de véhicule selon le préambule de la revendication 1.

Il est connu en général de coller les vitrages de véhicules dans les baies respectives de la carrosserie du véhicule. Pour cela, les vitres sont souvent pourvues d'un cordon profilé, qui adhère au moins sur leur surface principale faisant face vers l'intérieur, dans l'état installé. Sur le cordon profilé et/ou à proximité de celui-ci, on applique un boudin de colle sur cette même surface principale. La vitre pourvue du boudin de colle est ensuite insérée dans la baie. Cette dernière est encadrée d'une bride de montage, sur laquelle le boudin de colle vient s'appliquer. Les vitrages dans l'état installé doivent de préférence se trouver pratiquement en affleurement avec la surface externe de la carrosserie. Pour cela, la bride de montage est renfoncée vis-à-vis de la surface principale de la carrosserie au moyen d'un ressaut coudé périphérique. La hauteur du ressaut coudé correspond à l'épaisseur du vitrage et de la colle. Suivant certaines réalisations, les chants des vitres ne sont pas couverts par le cordon profilé. Comme les dimensions de la vitre et le pourtour de la baie ne peuvent pas être adaptés l'un à l'autre sans tolérance en raison des variations dimensionnelles de fabrication, il subsiste un espace, en forme de rainure entre le ressaut coudé ou le bord de la baie et la vitre.

Conformément au document DE-A1-38 18 930, on prévoit, pour recouvrir cet espace, une lèvre qui est formée directement sur le cordon profilé adhérant à la vitre, de préférence par extrusion. Dans une autre variante de réalisation du même document, on colle, le long de la surface périphérique de la vitre, sur la surface principale faisant face vers l'intérieur, une bande profilée supplémentaire en un plastique élastomère flexible. Celle-ci présente une portion tubulaire, qui remplit ledit espace dans l'état monté du vitrage.

On connaît également une forme de profilé (DE-A1-43 01 026), qui entoure sur trois côtés le bord externe et le chant de la vitre dans une forme de réalisation, c'est-à-dire également sur la surface principale externe, et qui comprend en outre une lèvre faisant saillie depuis la vitre, et servant de recouvrement de fente latérale.

Des matériaux thermoplastiques, de préférence des élastomères thermoplastiques (TPE) ou des oléfines thermoplastiques (TPO) ont été principalement utilisés jusqu'à présent en tant que matériau pour de tels profilés. Avec ceux-ci, la lèvre peut être fabriquée de manière suffisamment mince déjà au stade de l'extrusion, afin de pouvoir être fléchie élastiquement contre le bord de la baie lors de l'installation du vitrage dans la carrosserie sans générer de forces de réaction trop élevées lors du montage. En plus de sa fonction d'étanchéification, la lèvre centre le vitrage dans la baie lors de l'insertion et maintient le vitrage centré.

Or, des salissures peuvent encore s'accumuler dans l'espace ainsi recouvert par la lèvre repliée, et ne peuvent être éliminées que difficilement du fond de la rainure.

Le document EP-A-0 611 672 décrit un vitrage avec un cordon profilé selon le préambule de la revendication 1.

L'invention a pour but de créer un vitrage avec un cordon profilé comprenant un appendice de recouvrement, tel que le recouvrement de l'espace entre le bord de la vitre et la partie de paroi adjacente soit encore amélioré.

A cet égard, l'invention a pour objet un vitrage selon la revendication 1.

Par "chant du vitrage", on entend soit le chant de la vitre elle-même ou, si le cordon profilé recouvre celui-ci, la portion de cordon correspondante.

De cette façon, on obtient, sans devoir utiliser de profils d'étanchéité séparés, un recouvrement de l'espace latéral effectuant avantageusement une obturation en affleurement avec la surface principale de la vitre et avec la surface de paroi ou de carrosserie adjacente. En plus des avantages techniques, on obtient ainsi visuellement une surface fermée.

Les caractéristiques des revendications dépendantes indiquent des perfectionnements avantageux de cet objet.

La manipulation du vitrage pendant le montage est grandement facilitée, selon des perfectionnements avantageux, si le cordon profilé est formé sur la vitre, de telle sorte que la deuxième nervure d'étanchéité s'applique ou s'étend déjà librement contre ou à proximité du chant du vitrage après la fixation du cordon profilé sur la vitre, et/ou que la lèvre présente, sur son extension longitudinale entre un profil de base du cordon profilé fixé à la vitre et les nervures d'étanchéité un point de fléchissement de section transversale fortement réduite.

D'autres caractéristiques et avantages de l'objet de l'invention ressortent des dessins d'un exemple de réalisation et de leur description annexée ci-dessous. Dans les dessins,
la figure 1 représente schématiquement une vue en coupe de la zone périphérique d'une vitre avec un cordon profilé y adhérant, lequel comprend une lèvre pourvue de deux nervures d'étanchéité faisant saillie à ses extrémités libres dans des directions opposés;
la figure 2 représenté schématiquement une vue en coupe dans l'état installé du vitrage illustré dans la figure 1.

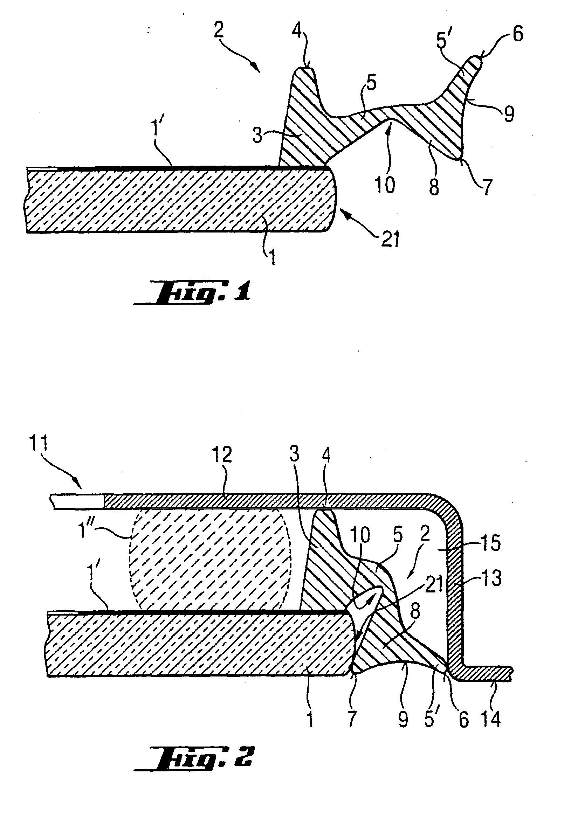

Selon la figure 1, une vitre 1 est pourvue, de manière connue en soi, d'un cordon profilé 2 adhérant près de son bord sur l'une de ses surfaces principales. Celui-ci peut être déposé, de manière également connue, directement sur la surface de la vitre 1, ou, comme illustré ici, sur un revêtement l'améliorant l'adhérence, de préférence par extrusion ou par un autre procédé tel que surmoulage ou encapsulation, collage d'un cordon préfabriqué, etc. Il se compose de préférence d'un matériau thermoplastique, de préférence d'un élastomère ou mélange d'élastomères thermoplastiques (TPE) ou d'oléfine(s) thermoplastique(s) (TPO).

La vitre 1 peut être constituée de verre ou d'un plastique transparent, et peut être réalisée de manière monolithique ou - différemment de l'illustration - avec une structure feuilletée associant au moins deux feuilles de verre et/ou plastique transparent.

Le cordon profilé 2 comprend essentiellement un profil de base 3 reposant sur une surface principale de la vitre. Celui-ci fait saillie sensiblement à angle droit depuis la surface de la vitre 1 et forme, à son extrémité libre, une nervure d'appui 4. Celle-ci se trouve dans la position d'installation, contre une bride de montage d'une baie de carrosserie et définit la position en hauteur de la vitre 1 (cf figure 2).

Dans la réalisation représentée, le cordon profilé 2 adhère seulement sur la surface principale de la vitre destinée à être tournée vers l'intérieur. En variante, il peut recouvrir deux ou trois faces de la vitre à savoir une surface principale et au moins une partie du chant de la vitre, ou respectivement les deux surfaces principales et le chant de la vitre en chevauchant le bord de cette dernière.

Une lèvre 5 formée d'une seule pièce fait saillie depuis le profil de base 3 à un certain angle par rapport à l'extension principale de ce dernier, éventuellement sensiblement parallèle à la surface principale de la vitre, à peu près à mi-hauteur entre la vitre 1 et la nervure d'appui 4 et s'étend au-delà du contour de la vitre. A son extrémité située à l'opposé du profil de base 3, la lèvre 5 possède un prolongement 5' flexible de manière élastique, qui fait saillie à un certain angle depuis la lèvre. Son extrémité libre forme une première nervure d'étanchéité 6 (externe) qui s'éloigne de la vitre. Une deuxième nervure d'étanchéité (interne) 7 est également formée sur la lèvre 5, située à l'opposé de la première nervure d'étanchéité 6. Les deux nervures d'étanchéité 6 et 7 sont raccordées à la lèvre 5 par l'intermédiaire d'un épaississement ou d'un renflement de matière 8. Elles s'étendent suivant l'extension longitudinale du cordon profilé 2 parallèlement l'une à l'autre. Du côté du cordon profilé 2 orienté à l'opposé de la lèvre 5, les deux nervures d'étanchéité 6, 7 sont reliées l'une à l'autre par une surface 9 plane, ou, comme illustré ici, légèrement courbée de préférence vers l'intérieur du véhicule.

Dans l'ensemble, le renflement de matière 8 présente, conjointement avec les nervures d'étanchéité 6 et 7 et la surface 9, une section transversale, à peu près triangulaire, éventuellement dissymétrique, dont une pointe rejoint la lèvre 5 et dont les deux autres pointes sont formées par les nervures d'étanchéité 6 et 7.

La lèvre 5, dans cette configuration, n'a plus de fonction directe à'étanchéification ou de recouvrement, bien qu'elle se trouve dans l'espace à recouvrir. Par contre, elle sert d'aile de support élastiquement déformable pour le prolongement 5', ainsi que les nervures d'étanchéité 6 et 7. Sa section transversale peut donc rester très mince (par exemple 0,8 mm). Dans le mode de réalisation illustré ici, elle a en fait, au milieu de son extension longitudinale entre le profil de base 3 et le renflement de matière 8, une section transversale particulièrement petite ou étroite. Celle-ci constitue un point de fléchissement 10 à la façon d'une charnière plate. Entre le chant 21 du vitrage, c'est-à-dire le chant de la vitre 1 elle-même, ou le cas échéant la portion du cordon profilé 2 recouvrant le chant de la vitre, et la deuxième nervure d'étanchéité 7, il n doit y avoir aucun contact d'adhésion. Afin de garantir cela, on conserve, lors de l'extrusion du cordon profilé, tout d'abord un espace entre la deuxième nervure d'étanchéité 7 (orientée vers la vitre) et le bord de la vitre. Celui-ci peut ensuite être réduit par précontrainte interne, sous l'effet du poids propre immédiatement après l'extrusion du cordon profilé, ou par un processus de mise en forme séparé. Les cordons profilés thermoplastiques peuvent, de manière connue, également être post-formés de manière plastique par chauffage. Un léger appui élastique libre de la deuxième nervure d'étanchéité 7 contre le chant 21 de la vitre peut être avantageux lors du montage, parce que la nervure est ainsi protégée contre un rabattement au cours de l'insertion de la vitre, et que la lèvre non sollicitée ne dépasse pas trop du bord de la vitre.

La figure 2 illustre mieux l'intérêt technique et optique de cette forme de réalisation du cordon profilé. On reconnaît ici, outre la vitre 1 et le cordon profilé 2, également le bord d'une baie 11 d'une carrosserie non illustrée davantage. Une bride de montage 12 encadre la baie. Elle est légèrement renfoncée par rapport à la surface externe de la carrosserie 14 s'y raccordant, au moyen d'un ressaut 13, qui forme la partie de paroi adjacente au vitrage, Le vitrage comme on l'a déjà mentionné, est appliqué sur la bride de montage au moyen de la nervure d'appui 4 du profil de base 3. Dans cet état monté, la surface principale externe de la vitre est pratiquement en affleurement avec la surface externe de la carrosserie.

La vitre 1 est raccordée par adhésion à la bride de montage 12 de manière connue, au moyen d'un boudin de colle 1" appliqué à côté et parallèlement au cordon profilé 2 sur le revêtement opaque 1', et uniquement représenté ici en pointillés. La nervure d'appui 4 sert dans ce cas d'espaceur même pour une épaisseur définie du cordon de colle.

Au plus tard au cours de cette opération d'installation, la lèvre 5 est fortement recourbée, la fonction du point de fléchissement 10 étant clairement mise en évidence ici. On reconnaît bien l'espace 15 en forme de rainure, dans laquelle est installée la lèvre. La première nervure d'étanchéité 6 repose contre le ressaut 13, la deuxième nervure d'étanchéité 7 repose contre le chant 21 de la vitre 1, sur chaque chant aussi près que possible de la face principale extérieure. La déformation élastique du prolongement 5' assure la force de pression nécessaire des deux nervures d'étanchéité 6 et 7. Conjointement avec la surface 9, celles-ci forment un appendice de recouvrement de l'espace 15, qui repose presqu'en affleurement avec la surface extérieure de la carrosserie, et ce sans devoir utiliser de profil d'étanchéité supplémentaire. Par rapport aux configurations antérieures de lèvres, on obtient ici un espace résiduel particulièrement réduit entre la vitre et la baie, de sorte que l'on peut éviter non seulement les salissures, mais aussi les bruits aérodynamiques.

La configuration de la lèvre et des nervures d'étanchéité exige toutefois de considérer tout particulièrement les conditions aux bords, afin de pouvoir obtenir un montage fonctionnel et d'exclure, au cours de l'utilisation ultérieure du véhicule, pratiquement tout endommagement et/ou perte de fonctionnalité.

Lors de l'installation du vitrage dans la baie 11 contre la bride de montage 12, tout d'abord le prolongement 5' ou la première nervure d'étanchéité 6 passent d'abord contre le ressaut 13, ou contre le bord dans la transition de la surface externe de la carrosserie 14 au ressaut 13. Si l'on continue de pousser la vitre 1 - ce qui comprime ainsi le boudin de colle 1" appliqué auparavant - le contact entre la première nervure d'étanchéité 6 et le ressout (listel) 13 fait fléchir encore davantage la lèvre 5. Ensuite, la deuxième nervure d'étanchéité 7 arrive en contact avec le chant 21 de la vitre 1.

Le prolongement 5' de la lèvre 5 est également conçu en forme de lèvre avec une faible section transversale. En tant que prolongement de la lèvre 5, il doit en particulier être conçu avec une longueur et une élasticité suffisantes pour qu'il puisse absorber de manière sûre toutes les variations dimensionnelles admissibles des dimensions réciproques de la vitre et de la baie et que la première nervure d'étanchéité 6 vient reposer de manière sûre contre la partie de paroi adjacente, telle que le ressaut 13.

Par contre, la deuxième nervure d'étanchéité 7 est la pointe du renflement de matière compact 8, qui est en soi essentiellement plus rigide que la lèvre 5 et son prolongement 5'. En ajoutant suffisamment de matière dans les transitions entre la lèvre 5 et les nervures d'étanchéité, on garantit qu'aucune des nervures d'étanchéité 6, 7 ne se rabat vers l'intérieur au cours du montage, suite à un frottement entre la carrosserie ou la vitre et le matériau du cordon profilé.

De préférence, on exclut également la possibilité que les nervures d'étanchéité 6, 7 fassent saillie au-delà de la surface extérieure de la carrosserie dans l'état installé, ou reposent d'une certaine manière sur la face externe de la vitre. Ceci est relativement facile à obtenir en dimensionnant correctement la longueur et la section transversale de la lèvre. La forme et la disposition du point de fléchissement 10 entre deux sections transversales relativement épaisses empêche également que la lèvre 5 soit trop étirée lors de l'installation du vitrage.

Finalement, on fait en sorte, par des mesures supplémentaires, que les nervures d'étanchéité 6, 7 ne puissent être repoussées de manière involontaire (par exemple lors du lavage du véhicule) depuis l'extérieur dans l'espace 15. Pour cela, on peut former une lèvre d'appui supplémentaire ou un autre composant profilé approprié sur le renflement de matière 8 ou sur la lèvre 5. De tels composants peuvent se trouver dans la position installée dans l'espace recouvert de l'espace 15 et s'appuient sur le fond de l'interstice par exemple dans la rainure entre le ressaut 13 et la bride de montage 12. Ils ne doivent toutefois pas affecter la mobilité de la lèvre 5 ou du prolongement 5'.

La description détaillée qui vient d'être donnée concerne plus particulièrement un vitrage muni par extrusion d'un cordon profilé adhérant à une surface principale.

Les mêmes enseignements s'appliquent à des profilés obtenus par d'autres techniques (encapsulation ou collage) et/ou recouvrant plus d'une face de la vitre.

## Revendications

1. Vitrage, en particulier pour l'installation dans une baie de carrosserie de véhicule, comprenant une vitre (1) avec un cordon profilé (2) qui est fixé, directement ou sur un revêtement améliorant l'adhérence (1') au moins sur la surface principale de la vitre faisant face vers l'intérieur à l'état installé, et qui comprend, en tant qu'appendice de recouvrement latéral, une lèvre (5) saillante au-delà du bord de la vitre (1) avec une première nervure d'étanchéité (6) pouvant être appliquée contre une partie de paroi adjacente au vitrage lors de l'installation du vitrage, **caractérisé en ce que** la lèvre (5) présente, parallèlement à la première nervure d'étanchéité (6) pouvant être appliquée contre ladite partie de paroi adjacente au vitrage lors de l'installation du vitrage au moins une deuxième nervure d'étanchéité (7) pouvant être appliquée contre le chant (21) du vitrage sans contact d'adhérence.

2. Vitrage selon la revendication 1, **caractérisé en ce que** le cordon profilé (2) est formé de telle sorte que la deuxième nervure d'étanchéité (7) s'applique lâchement contre le chant (21) du vitrage après la fixation du cordon profilé (2) sur la vitre (1), la première nervure d'étanchéité (6) étant orientée à l'opposé du chant (11).

3. Vitrage selon la revendication 1 ou 2, **caractérisé en ce que** la lèvre (5) présente, sur son extension longitudinale entre un profil de base (3) du cordon profilé (2) fixé à la vitre (1) et les nervures d'étanchéité (6, 7) un point de fléchissement (10) de section transversale fortement réduite.

4. Vitrage selon l'une quelconque des reven ications précédentes, **caractérisé en ce que** la première nervure d'étanchéité (6) est prévue sur l'extrémité libre d'un prolongement (5') flexible élastiquement se raccordant à la lèvre (5).

5. Vitrage selon l'une quelconque des revendications précédentes, **caractérisé en ce que** la deuxième nervure d'étanchéité (7) forme l'extrémité libre d'un renflement de matière (8) se raccordant à la lèvre (5).

6. Vitrage selon la revendication 5, **caractérisé en ce que** le renflement de matière (8) présente une section transversale essentiellement triangulaire.

7. Vitrage selon l'une quelconque des revendications précédentes, **caractérisé en ce que** les deux nervures d'étanchéité (6, 7) sont raccordées l'une à l'autre sur le côté orienté à l'opposé de la lèvre (5), par une surface (9) plane ou seulement faiblement courbée.

8. Vitrage selon l'une quelconque des revendications précédent **caractérisé en ce qu'**un composant profilé s'appuyant après installation du vitrage dans la baie de carrosserie, dans une rainure latérale (15) située entre un ressaut (13) et une bride de montage (12) de la baie de carrosserie est formé sur le cordon profilé (2) et n'affecte pas la capacité de fléchissement élastique de la lèvre (5).

## Claims

1. Window, in particular for fitting in a bodywork opening of a vehicle, comprising a pane (1) with a profiled bead (2) which is fixed, directly or on a coating (1') improving adhesion, at least on the main surface of the pane facing inwards in the fitted state, and which comprises, as lateral covering attachment, a lip (5) projecting beyond the edge of the pane (1) with a first sealing rib (6) which can be applied against wall part adjacent to the window when the window is fitted, **characterized in that** the lip (5) has, parallel to the first sealing rib (6) which can be applied against said wall part adjacent to the window when the window is fitted, at least one second sealing rib (7) which can be applied against the edge (21) of the window without adhesion contact.

2. Window according to Claim 1, **characterized in that** the profiled bead (2) is formed in such a way that the second sealing rib (7) is applied loosely against the edge (21) of the window after the profiled bead (2) has been fixed on the pane (1), the first sealing rib (6) being oriented in the opposite direction to the edge (21).

3. Window according to Claim 1 or 2, **characterized in that** the lip (5) has, on its longitudinal extension between a base profile (3) of the profiled bead (2) fixed to the pane (1) and the sealing ribs (6, 7), a point of flexion (10) of greatly reduced cross section.

4. Window according to any one of the preceding claims, **characterized in that** the first sealing rib (6) is provided on the free end of a flexible continuation (5') joined elastically to the lip (5).

5. Window according to any one of the preceding claims, **characterized in that** the second sealing rib (7) forms the free end of a bulge of material (8) joined to the lip (5).

6. Window according to Claim 5, **characterized in that** the bulge of material (8) has an essentially triangular cross section.

7. Window according to any one of the preceding claims, **characterized in that** the two sealing ribs (6, 7) are connected to one another on the side oriented away from the lip (5), via a flat or only slightly curved surface (9).

8. Window according to any one of the preceding claims, **characterized in that** a profiled component bearing, after fitting of the window in the bodywork opening, in a lateral groove (15) situated between the ledge (13) and a mounting flange (12) of the bodywork opening is formed on the profiled bead (2) and does not affect the elastic flexion capacity of the lip (5).

## Patentansprüche

1. Fensterscheibe, insbesondere zum Einbau in eine Fensteröffnung einer Fahrzeugkarosserie, umfassend eine Scheibe (1) mit einem Profilstrang (2), der wenigstens auf der im Einbauzustand innenliegenden Hauptfläche der Fensterscheibe direkt oder auf einer haftverbessernden Beschichtung (1') befestigt ist, und als seitliche Spaltabdeckung eine über den Rand der Fensterscheibe (1) auskragende Lippe (5) mit iner beim Einbau der Fensterscheibe an ein angrenzendes Wandteil anlegbaren ersten Dichtleiste (6) umfasst, **dadurch gekennzeichnet, dass** die Lippe (5) parallel zu der an das besagte, beim Einbau der Verglasung benachbarte Wandteil anlegbaren ersten Dichtleiste (6) mindestens eine zweite, an die Stirnkante (21) der Fensterscheibe ohne haftenden Kontakt anlegbare Dichtleiste (7);aufweist.

2. Fensterscheibe nach Anspruch 1, **dadurch gekennzeichnet, dass** der Profilstrang (2) so geformt ist, dass die zweite Dichtleiste (7) nach dem Befestigen des Profilstrangs (2) auf der Fensterscheibe lose an deren Stirnkante (21) anliegt, wobei die erste Dichtleiste (6) von der Stirnkante (21) abgewandt ist.

3. Fensterscheibe nach Anspruch 1 oder 2, **dadurch gekennzeichnet, dass** die Lippe (5) in ihrem Längsverlauf zwischen einem auf der Scheibe (1) befestigten Grundprofil (3) des Profilstrangs (2) und den Dichtleisten (6, 7) eine Biegestelle (10) mit stark reduziertem Querschnitt aufweist.

4. Fensterscheibe nach einem der vorstehenden Ansprüche, **dadurch gekennzeichnet, dass** die erste Dichtleiste (6) am freien Ende eines an die Lippe (5) anschließenden, elastisch nachgiebigen Fortsatzes (5') vorgesehen ist.

5. Fensterscheibe nach einem der vorstehenden Ansprüche, **dadurch gekennzeichnet, dass** die zweite Dichtleiste (7) das freie Ende einer an die Lippe (5) anschließenden Materialhäufung (8) bildet.

6. Fensterscheibe nach Anspruch 5, **dadurch gekennzeichnet, dass** die Materialhäufung (8) einen etwa dreieckigen Querschnitt aufweist.

7. Fensterscheibe nach einem der vorstehenden Ansprüche, **dadurch gekennzeichnet, dass** die beiden Dichtleisten (6, 7) auf der von der Lippe (5) abgewandten Seite durch eine ebene oder nur gering gekrümmte Oberfläche (9) miteinander verbunden sind.

8. Fensterscheibe nach einem der vorstehenden Ansprüche, **dadurch gekennzeichnet, dass** an den Profilstrang (2), nach dem Einbau in eine Fensteröffnung einer Fahrzeugkarosserie, ein sich in einem seitlichen Spalt (15) zwischen einem Steg (13) und einem Montageflansch (12) der Fensteröffnung der Fahrzeugkarosserie abstützender Profilbestandteil angeformt ist, welcher die elastische Nachgiebigkeit der Lippe (5) nicht beeinträchtigt.
